Europäisches Patentamt

European Patent Office

Office européen des brevets

(11) Veröffentlichungsnummer : **0 025 590**
**B1**

(12) **EUROPÄISCHE PATENTSCHRIFT**

(45) Veröffentlichungstag der Patentschrift :
13.03.85

(51) Int. Cl.⁴ : **G 09 F   9/35,** G 02 F   1/13

(21) Anmeldenummer : 80105421.4

(22) Anmeldetag : 11.09.80

(54) **Anzeigeanordnung mit einer Flüssigkeitszelle.**

(30) Priorität : 13.09.79 DE 2937054

(43) Veröffentlichungstag der Anmeldung :
25.03.81 Patentblatt 81/12

(45) Bekanntmachung des Hinweises auf die Patenterteilung : 13.03.85 Patentblatt 85/11

(84) Benannte Vertragsstaaten :
FR GB IT

(56) Entgegenhaltungen :
EP-A- 0 010 796
DE-A- 2 631 329
DE-A- 2 845 858
DE-B- 2 042 180
US-A- 3 891 309

(73) Patentinhaber : **International Standard Electric Corporation**
**320 Park Avenue**
**New York New York 10022 (US)**

(72) Erfinder : **Tischer, Kurt Manfred**
**Kiesweg 1**
**D-7441 Unterensingen (DE)**
Erfinder : **Voigt, Klaus-Peter**
**Königsberger Strasse 10**
**D-7300 Esslingen (DE)**
Erfinder : **Zondler, Rolf, Dr.**
**Marabustrasse 26**
**D-7000 Stuttgart-Neugereut (DE)**
Erfinder : **Troester, Fritz, Dr.**
**Hambachstrasse 3**
**D-7121 Hessingheim (DE)**

(74) Vertreter : **Graf, Georg Hugo, Dipl.-Ing. et al**
**c/o Standard Elektrik Lorenz AG Patent- und
Lizenzwesen Postfach 300 929 Kurze Strasse 8**
**D-7000 Stuttgart 30 (DE)**

## Beschreibung

Die Erfindung betrifft eine Anzeigeanordnung mit einer Flüssigkeitszelle nach dem Oberbegriff des Anspruchs 1.

Eine derartige Anzeigeanordnung ist beispielsweise aus DE-B-2 042 180 und DE-A-2 631 329 bekannt. Sie ist auch in der gemäß EPÜ Art. 54 (3) (4) für FR und IT als Stand der Technik geltenden EP-A-10 796 beschrieben. Der Beobachtungswinkelbereich der darin gezeigten Lichtdurchtrittswinkel der Jalousienblende ist begrenzt.

Es gibt jedoch Fälle, in denen ein größerer Beobachtungswinkelbereich erwünscht ist, innerhalb dessen der Durchtritt der nichtgestreuten Lichtstrahlen zur Vorderseite der Anzeigeanordnung unterbunden oder mindestens weitest gehend vermindert ist.

Aufgabe der Erfindung ist es daher, eine Anzeigeanordnung der eingangs genannten Gattung anzugeben, die einen größeren, durch direkten Lichtdurchtritt ungestörten Beobachtungswinkelbereich gestattet.

Gelöst wird diese Aufgabe durch die im Anspruch 1 angegebenen Merkmale. Eine vorteilhafte Ausgestaltung der Erfindung kann dem abhängigen Anspruch entnommen werden.

Vorteil der Erfindung ist, daß direkt zur Vorderseite durchdringendes Licht totalreflektiert wird und somit nicht aus der Anzeigeanordnung austritt.

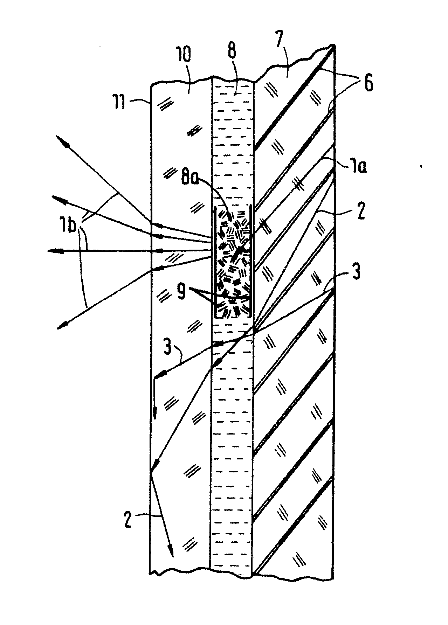

Die Erfindung wird nun an einem Ausführungsbeispiel und der Zeichnung näher erläutert.

Die Figur zeigt schematisch die wesentlichen Teile einer erfindungsgemäßen Anzeigeanordnung. Zwischen den Platten 10 und 7 befindet sich eine Flüssigkeit 8. Auf den der Flüssigkeit zugewandten Plattenseiten sind durchsichtige Elektroden 9 aufgebracht.

Im Flüssigkeitsbereich 8a ist die Flüssigkeit durch Anlegen einer Spannung an die für diesen Bereich wirksamen Elektroden 9 lichtstreuend geschaltet, während in den übrigen Bereichen, an deren Elektroden keine Spannung anliegt, die Flüssigkeit transparent bleibt.

Die Platte 7 ist mit Lamellen 6, die in das Medium der Platte 7 eingebettet sind, als Jalousienblende ausgebildet. Ein Beobachter, der die Flüssigkeitszellen mit Blick auf die Vorderseite 11 betrachtet, sieht im transparenten Bereich der Flüssigkeit 8 die dunkle Färbung der Lamellen 6 und im streuenden Bereich 8a ein helles Zeichen auf dunklem Hintergrund. Die Flüssigkeit 8 kann beispielsweise ein Flüssigkristall oder ein Kolloid sein.

Anhand von drei als Beispiel gezeichneten Lichtstrahlen soll die Funktionsweise der Anzeigeanordnung erläutert werden. Ein erster Lichtstrahl 1 durchläuft als Strahl 1a die Jalousienblende 7 und trifft auf den streuenden Bereich 8a der Flüssigkeit 8. Ein Teil des gestreuten Lichtes verläßt unter Einhaltung der Brechungsgesetze als Strahlen 1b die Vorderseite 11 der Anzeigeanordnung, um so dem Beobachter als heller Fleck zu erscheinen.

Für den Lichtstrahl 2 entfällt die Streuung in der Flüssigkeit 8, sodaß dieser Lichtstrahl den durch die Brechungsgesetze bestimmten Weg durch die Flüssigkeit 8 und die Platte 10 nimmt und durch die erfindungsgemäße Wahl der Lamellenneigung an der Vorderseite 11 unter einem Winkel auftrifft, bei dem er totalreflektiert wird.

Während der Lichtstrahl 2 mit flachestmöglichem Winkel durch die Jalousienblende dringt, ist als weiteres Beispiel der Lichtstrahl 3 mit dem steilstmöglichen Winkel gewählt.

Wie in der Figur gezeigt, ist das Ausführungsbeispiel so beschaffen, daß dieser Lichtstrahl 3 mit dem Grenzwert der Totalreflexion an der Vorderseite 11 reflektiert wird, so daß kein die Jalousienblende durchdringendes Licht, welches auf den transparenten Bereich der Flüssigkeit 8 trifft, die Vorderseite 11 der Anzeigeanordnung verlassen kann.

## Ansprüche

1. Anzeigeanordnung mit einer Flüssigkeitszelle, bei der eine zwischen durchsichtigen Elektroden Liegende Flüssigkeit durch Anlegen einer Spannung von Transparenz auf Lichtstreuung schaltbar ist, bei der auf der Rückseite eine Lichtquelle und zwischen dieser und der Flüssigkeit eine aus in ein optisch transparentes Medium eingebetteten Lamellen bestehende Jalousienblende vorgesehen ist, die den direkten Lichtdurchtritt durch die Flüssigkeitszelle zum Beobachter verhindert, so daß die lichtstreuend geschalteten Bereiche als helle Zeichen auf dunklem Hintergrund sichtbar sind, dadurch gekennzeichnet, daß die Lamellen (6) der Jalousienblende (7) so geneigt sind, daß die durch die Lamellen einfallenden und die Flüssigkeitszelle ohne Streuung durchdringenden Lichtstrahlen (2, 3) an der dem Betrachter zugewandten Grenzfläche Platte (10)-Luft totalreflektiert werden.

2. Anzeigeanordnung nach Anspruch 1, dadurch gekennzeichnet, daß die Lichtstrahlen (3), die mit dem geringsten Einfallswinkel zum Einfallslot gerade noch die Jalousienblende (7) durchdringen, annähernd im Grenzwert der Totalreflexion an der Grenzfläche Platte (10)-Luft reflektiert werden.

## Claims

1. Display device with a liquid cell, wherein a fluid sandwiched between transparent electrodes is switchable from transparent to scattering by application of a voltage, wherein a light source is located behind the display device and wherein between this light source and the liquid cell there is provided a louvre shutter which consists of slats embedded in an optically transparent medium and prevents direct passage of light through the liquid cell to the viewer so that the regions switched to the scattering state are visable as bright characters on a dark background, characterized in that, the slats (6) of the louvre shutter (7) are so inclined that the light beams (2, 3) incident through the slats and passing through the liquid cell without being scattered are totally reflected at the plate (10)-air interface facing the viewer.

2. A display device as claimed in Claim 1, characterized in that the light beams (3) passing through the louvre shutter (7) at the smallest angle with the perpendicular at the point of incidence are reflected at the plate (10)-air interface at about the critical angle of total reflection.

## Revendications

1. Dispositif de visualisation à cellule à liquide, dans lequel un liquide placé entre deux électrodes transparentes peut passer de l'état où il est transparent à celui où il disperse la lumière lorsqu'on lui applique une tension, dans lequel est prévu sur la surface arrière une source lumineuse et, entre celle-ci et le liquide, un obturateur à persiennes constitué de lamelles encastrées dans un matériau optiquement transparent, ledit obturateur à persiennes empêchant le passage direct de la lumière à travers la cellule à liquide en direction de l'observateur, de sorte que les zones de dispersion de la lumière sont visibles sous la forme de signes clairs sur fond sombre, caractérisé en ce que les lamelles (6) de l'obturateur à persiennes (7) sont inclinées pour que les rayons lumineux (2, 3) passant à travers les lamelles et traversant la cellule liquide sans subir de dispersion soient totalement réfléchis au niveau de l'interface plaque (10)-air tournée vers l'observateur.

2. Dispositif de visualisation conforme à la revendication 1, caractérisé en ce que les rayons lumineux (3) traversant encore l'obturateur à persiennes (7) selon l'angle d'incidence le plus faible possible par rapport à la normale sont réfléchis, au niveau de l'interface plaque (10)-air, pratiquement selon la valeur limite de la réflexion totale.